# EUROPEAN PATENT APPLICATION

(11) **EP 3 885 885 A1**
(43) Date of publication of application: **29.09.2021**
(21) Application number: 21159010.4
(22) Date of filing: 24.02.2021
(51) Int. Cl.: G06F 3/0486, G06F 3/0488

(54) **METHOD, APPARATUS AND STORAGE MEDIUM FOR DISPLAYING APPLICATION INTERFACE**

(30) Priority: 24.03.2020 CN 202010215084
(71) Applicant: Beijing Xiaomi Mobile Software Co., Ltd., Beijing 100085 (CN)
(72) Inventor: YANG, Huiying, Beijing, Beijing 100085 (CN); LI, Jiayan, Beijing, Beijing 100085 (CN)
(74) Representative: dompatent von Kreisler Selting Werner - Partnerschaft von Patent- und Rechtsanwälten mbB

(57) **Abstract**

A method for displaying application interface includes: receiving a first instruction for instructing to display an interactive interface of a current application in a floating window manner; determining a first application to which an interactive interface currently displayed on a display interface of the mobile terminal belongs; and displaying a floating window on the display interface, and displaying the interactive interface of the first application in the floating window. When a response time of the first application to certain requests is longer in the process for a user to use the first application, the interactive interface of the first application is displayed in a floating window manner, such that the user can view the response of the first application at any time, and can view information other than the first application, thereby improving efficiency of using the mobile terminal and user experience.

## Description

### BACKGROUND

With the rapid development of communication technologies, mobile terminals have been widely used, and more and more applications (APPs) can be installed in the mobile terminals. In the process of using applications on mobile terminals, users often wait for the applications to respond. For example, after starting a game application, a user may need to wait for the loading process of the game application.

### SUMMARY

The present disclosure generally relates to mobile terminal data processing technologies, and more specifically, to a method, apparatus and storage medium for displaying an application interface.

According to a first aspect of the present disclosure, there is provided a method for displaying an application interface, which is applied to a mobile terminal, and the method includes:
receiving a first instruction for instructing to display an interactive interface of a current application in a floating window manner;
determining a first application to which an interactive interface currently displayed on a display interface of the mobile terminal belongs; and
displaying a floating window on the display interface of the mobile terminal, and displaying the interactive interface of the first application in the floating window.

In some embodiments, the displaying a floating window on the display interface of the mobile terminal includes: displaying a floating window on the display interface of the mobile terminal in a set-to-top display manner; and
the method further includes:
displaying an interactive interface of a second application or displaying a home screen desktop on the display interface of the mobile terminal in a full-screen manner when displaying a floating window on the display interface of the mobile terminal.

In some embodiments, the displaying the interactive interface of the first application in the floating window includes: displaying, in a floating window manner, the interactive interface of the first application in a designated area on the display interface of the mobile terminal.

In some embodiments, the method further includes:
receiving a drag touch signal for the floating window, and changing a display area of the floating window on the display interface according to a moving track of the drag touch signal.

In some embodiments, the method further includes: detecting distances between designated borders of the floating window and same-directional borders of the display interface, when changing a display area of the floating window on the display interface according to a moving track of the drag touch signal, and determining that a side of the display interface corresponding to the minimum distance is a target border, and updating a display area of the floating window to a display area that fits the target border, when the minimum distance in the at least one detected distance is less than a first set distance;
or,
detecting distances between each vertex of the floating window and same-directional vertexes of the display interface, when changing a display area of the floating window on the display interface according to a moving track of the drag touch signal, and determining that a vertex of the display interface corresponding to the minimum distance is a target vertex, and updating a display area of the floating window to a display area that fits the target vertex, when the minimum distance in the at least one detected distance is less than a second set distance.

In some embodiments, the method further includes:
detecting a moving direction of the drag touch signal when changing a display area of the floating window on the display interface according to a moving track of the drag touch signal;
calculating angles between the moving direction and normal directions of two borders of the display interface respectively, determining two opposite borders corresponding to the minimum angle, using a border that the moving direction faces among the two opposite borders as a target border, and updating a display area of the floating window to a display area that fits the target border; or
calculating angles between the moving direction and two diagonal lines of a touch screen respectively, determining a diagonal line corresponding to the minimum angle, using a vertex that the moving direction faces in the diagonal lines as a target vertex, and updating a display area of the floating window to a display area that fits the target border.

In some embodiments, the method further includes:
receiving a first set touch signal for the floating window, displaying the interactive interface of the first application in a first window, a size of the first window is smaller than that of the display interface of the mobile terminal, receiving a click touch signal for a control of the interactive interface of the first application in the first window, determining a response interface of the first application for the click touch signal, and displaying the response interface in the first window.

In some embodiments, the method further includes: receiving a second instruction for instructing to end displaying the interactive interface of the first application in a floating window manner; and displaying the interactive interface of the first application on the display interface of the mobile terminal in a full-screen manner.

In some embodiments, the method further includes:
receiving a third instruction for instructing to close a floating window, and closing the floating window.

According to a second aspect of the present disclosure, there is provided an apparatus for displaying an application interface which is applied to a mobile terminal, the apparatus includes:
a first receiving component configured to receive a first instruction for instructing to display an interactive interface of a current application in a floating window manner;
a determining component configured to determine a first application to which an interactive interface currently displayed on a display interface of the mobile terminal belongs; and
a first displaying component configured to display a floating window on the display interface of the mobile terminal, and display the interactive interface of the first application in the floating window.

In some embodiments, the first displaying component is further configured to display a floating window on the display interface of the mobile terminal using the following method: displaying a floating window on the display interface of the mobile terminal in a set-to-top display manner; and
the apparatus further includes:
a second displaying component configured to display an interactive interface of a second application or display a home screen desktop on the display interface of the mobile terminal in a full-screen manner when displaying a floating window on the display interface of the mobile terminal.

In some embodiments, the first displaying component is further configured to display the interactive interface of the first application in the floating window by using the following method: displaying, in a floating window manner, the interactive interface of the first application in a designated area on the display interface of the mobile terminal.

In some embodiments, the apparatus further includes:
a second receiving component configured to receive a drag touch signal for the floating window; and
the first displaying component is further configured to change a display area of the floating window on the display interface according to a moving track of the drag touch signal.

In some embodiments, the apparatus further includes:
a first detecting component configured to detect distances between designated borders of the floating window and same-directional borders of the display interface when changing a display area of the floating window on the display interface according to a moving track of the drag touch signal; and
a first updating component configured to determine that a side of the display interface corresponding to the minimum distance is a target border, and update a display area of the floating window to a display area that fits the target border when the minimum distance in at least one of the detected distances is less than a first set distance;
or,
the apparatus further includes:
   a second detecting component configured to detect distances between each vertex of the floating window and same-directional vertexes of the display interface when changing a display area of the floating window on the display interface according to a moving track of the drag touch signal; and
   a second updating component configured to determine that a vertex of the display interface corresponding to the minimum distance is a target vertex, and update a display area of the floating window to a display area that fits the target vertex when the minimum distance in at least one of the detected distances is less than a second set distance.

In some embodiments, the apparatus further includes:
a third detecting component configured to detect a moving direction of the drag touch signal when changing a display area of the floating window on the display interface according to a moving track of the drag touch signal; and
a third updating component configured to calculate angles between the moving direction and normal directions of two borders of the display interface respectively, determine two opposite borders corresponding to the minimum angle, use a border that the moving direction faces among the two opposite borders as a target border, and update a display area of the floating window to a display area that fits the target border; Alternatively, calculate angles between the moving direction and two diagonal lines of a touch screen respectively, determine a diagonal line corresponding to the minimum angle, use a vertex that the moving direction faces in the diagonal lines as a target vertex, and update a display area of the floating window to a display area that fits the target border.

In some embodiments, the apparatus further includes:
a third receiving component configured to receive a first set touch signal for the floating window;
a third displaying component configured to display the interactive interface of the first application in a first window, a size of the first window is smaller than that of the display interface of the mobile terminal;
a fourth receiving component configured to receive a click touch signal for a control of the interactive interface of the first application in the first window; and
a fourth displaying component configured to determine a response interface of the first application for the click touch signal, and display the response interface in the first window.

In some embodiments, the apparatus further includes:
a fifth receiving component configured to receive a second instruction for instructing to end displaying the interactive interface of the first application in a floating window manner; and
a fifth displaying component configured to display the interactive interface of the first application on the display interface of the mobile terminal in a full-screen manner.

In some embodiments, the apparatus further includes:
a sixth receiving component configured to receive a third instruction for instructing to close a floating window; and
a closing component configured to close the floating window.

According to a third aspect of the present disclosure, there is provided an apparatus for preventing false touches to a screen including:
a processor; and
memory storing instructions executable by the processor;
wherein the processor is configured to execute the executable instructions in the memory to implement steps of the above-described methods.

According to a fourth aspect of the present disclosure, there is provided a non-transitory computer-readable storage medium having executable instructions stored thereon, wherein when the executable instructions are executed by a processor, steps of the above-described methods are implemented.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this disclosure, illustrate embodiments consistent with the present invention and, together with the description, serve to explain the principles of the present invention.
FIG. 1 is a flowchart illustrating a method for preventing false touch of screen according to some embodiments.
FIG. 2 is a schematic diagram illustrating a display interface of a mobile terminal in the process of implementing the method for preventing false touch of screen according to some embodiments.
FIG. 3 is a schematic diagram illustrating a display interface of a mobile terminal in the process of implementing the method for preventing false touch of screen according to some embodiments.
FIG. 4 is a schematic diagram illustrating a display interface of a mobile terminal in the process of implementing the method for preventing false touch of screen according to some embodiments.
FIG. 5 is a schematic diagram illustrating a display interface of a mobile terminal in the process of implementing the method for preventing false touch of screen according to some embodiments.
FIG. 6 is a structural diagram illustrating an apparatus for preventing false touch of screen according to some embodiments.
FIG. 7 is a structural diagram illustrating an apparatus for preventing false touch of screen according to some embodiments.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

When the users use the network car-hailing application to issue a car-hailing request, they need to wait for the application to find a driver user who can provide services. In the waiting process, the users cannot get the latest processing progress of the application in time when leaving the application, and the simply waiting may consume the users' time, and prevent the users from using the mobile terminals to complete other requirements during the waiting period.

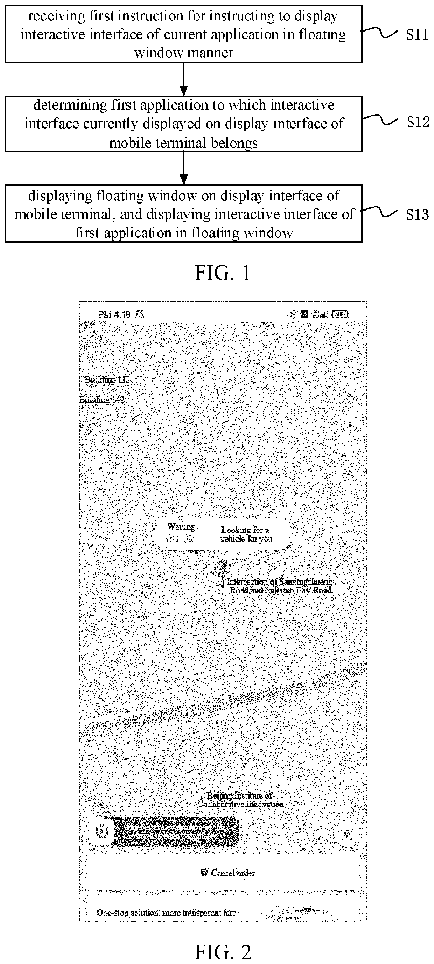

Various embodiments of the present disclosure provide a method for displaying an application interface. FIG. 1 is a flowchart illustrating a method for displaying an application interface according to some embodiments. As shown in FIG. 1, the method includes:
Step S11: receiving a first instruction for instructing to display an interactive interface of a current application in a floating window manner.
Step S12: determining a first application to which an interactive interface currently displayed on a display interface of the mobile terminal belongs.
Step S13: displaying a floating window on the display interface of the mobile terminal, and displaying the interactive interface of the first application in the floating window.

The first instruction is a touch instruction for a touch screen, a setting trigger instruction of setting buttons, a voice instruction, and the like.

When the first instruction is a touch instruction for a touch screen, for example, the first instruction includes: instructions of pulling down a notification bar and clicking a hanging button. Alternatively, the first instruction is an instruction of long pressing the touch screen. Alternatively, the first instruction is a sliding touch instruction of a predetermined direction or a predetermined shape.

When the first instruction is a setting trigger instruction of setting buttons, for example, the first instruction is an instruction to simultaneously press a volume up key and a switch key.

When the first instruction is a voice instruction, for example, the corresponding voice content is "floating display," "hanging," "start floating window," and the like.

When a response time of the first application to certain requests is longer in the process that users use the first application, the interactive interface of the first application is displayed in a floating window manner, such that the user can view the response of the first application at any time, and can view information other than the first application, and the user can freely control the waiting time without losing the progress of the first application, which improves the efficiency of using the mobile terminal by the users, and improves the user experience.

There is further provided a method for displaying an application interface in some embodiments of the present disclosure, the method includes the method shown in FIG. 1, and the displaying a floating window on the display interface of the mobile terminal in step S13 shown in FIG. 1 includes: displaying, in a set-to-top display manner, a floating window on the display interface of the mobile terminal. The method further includes: displaying an interactive interface of a second application or displaying a home screen desktop on the display interface of the mobile terminal in a full-screen manner, when displaying a floating window on the display interface of the mobile terminal.

Herein, when the mobile terminal runs a plurality of applications simultaneously, a second application other than the first application is selected from the running applications. There are many ways to select the second application. For example, the second application is an application that goes to the background before starting the first application, or an application with the longest running time in the foreground within the set time from the current time, or a most frequently used application within the set time from the current time.

There is further provided a method for displaying an application interface in some embodiments of the present disclosure, the method includes the method shown in FIG. 1, and the displaying the interactive interface of the first application in the floating window in step S13 shown in FIG. 1 includes: displaying, in a floating window manner, the interactive interface of the first application in a designated area on the display interface of the mobile terminal. Herein, the designated area is a default area, and the designated area can be set to areas at different positions according to the user's habits. For example, the designated area is an area of the set size at the upper right corner, the upper left corner, the lower right corner or the lower left corner of the display interface of the mobile terminal, or an area of the set size away from a border that fits the display interface, for example, an area that fits the upper border, the lower border, the left border or the right border, which is located in the middle position.

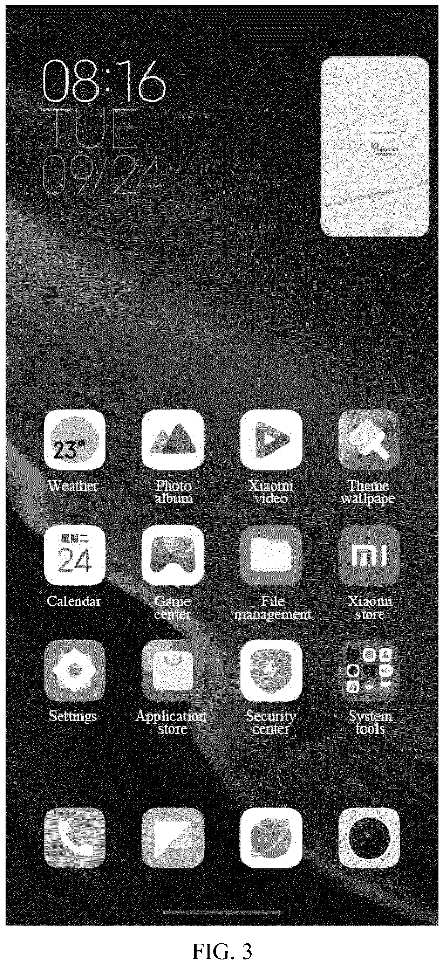

FIGS. 2 and 3 are schematic diagrams illustrating a display interface of a mobile terminal in the process of implementing the method for preventing false touch of screen according to some embodiments. Examples with reference to FIGS. 2 and 3 are as follows:
During normal use of the mobile terminal, the interactive interface of the network car-hailing application is displayed on the full screen, the user waits for the result of the car-hailing after issuing a car-hailing request, and the mobile terminal displays the display interface shown in FIG. 2. When the user wants to use the waiting time to view the information of other applications, the user issues an instruction to pull down a notification bar and click a hanging button, the mobile terminal determines that the first instruction for instructing to display the interactive interface of the current application in the floating window manner is received, the interactive interface of the network car-hailing application is displayed in the default area in the display interface of the mobile terminal in the floating window manner, and the default area is an area near the upper right corner, and the mobile terminal displays the display interface shown in FIG. 3. At this time, the user can view the progress of the network car-hailing application through the floating window, and can operate other applications.

There is further provided a method for displaying an application interface in some embodiments of the present disclosure, the method includes the method shown in FIG. 1, and further includes: receiving a drag touch signal for the floating window, and changing a display area of the floating window on the display interface according to a moving track of the drag touch signal. For example, the default display area of the floating window in the display interface of the mobile terminal is an area in the upper right corner, and the floating window can be dragged to another position because of the user's needs.

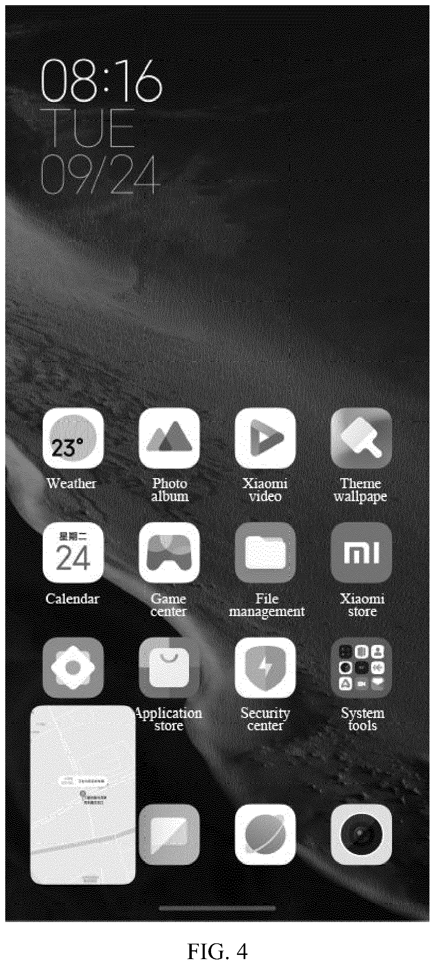

FIG. 4 is a schematic diagram illustrating a display interface of a mobile terminal in the process of implementing the method for preventing false touch of screen according to some embodiments. As shown in FIG. 3 and FIG. 4, the user can drag the floating window in the default area in the upper right corner shown in FIG. 3 to an area in the lower left corner.

In the process of dragging, when the position of the floating window is close to the side or corner of the display interface, the floating window can be directly attracted to the position of the side or corner, thereby saving the user's operation time and simplifying the user's operation.

In order to achieve this function, the method further includes: detecting distances between designated borders of the floating window and same-directional borders of the display interface, when changing a display area of the floating window on the display interface according to a moving track of the drag touch signal, and determining that a side of the display interface corresponding to the minimum distance is a target border, and updating a display area of the floating window to a display area that fits the target border, when the minimum distance in at least one of the detected distances is less than a first set distance, ;
or, detecting distances between each vertex of the floating window and same-directional vertexes of the display interface, when changing a display area of the floating window on the display interface according to a moving track of the drag touch signal, and determining that a vertex of the display interface corresponding to the minimum distance is a target vertex, and updating a display area of the floating window to a display area that fits the target vertex, when the minimum distance in at least one of detected distances is less than a second set distance,.

In some embodiments, the floating window is attached to the position of the side or corner directly according to the use's dragging direction to save the user's operation time and simplify the user's operation.

In order to achieve this function, the method further includes: detecting a moving direction of the drag touch signal when changing a display area of the floating window on the display interface according to a moving track of the drag touch signal;
calculating angles between the moving direction and normal directions of two borders of the display interface respectively, determining two opposite borders corresponding to the minimum angle, using a border that the moving direction faces among the two opposite borders as a target border, and updating a display area of the floating window to a display area that fits the target border; or, calculating angles between the moving direction and two diagonal lines of a touch screen respectively, determining a diagonal line corresponding to the minimum angle, using a vertex that the moving direction faces in the diagonal line as a target vertex, and updating a display area of the floating window to a display area that fits the target border.

There is further provided a method for displaying an application interface in some embodiments of the present disclosure, the method includes the method shown in FIG. 1, and further includes: receiving a set touch signal for the floating window, displaying the interactive interface of the first application in a first window, a size of the first window is smaller than a size of the display interface of the mobile terminal, receiving a click touch signal for a control of the interactive interface of the first application in the first window, determining a response interface of the first application for the click touch signal, and displaying the response interface in the first window.

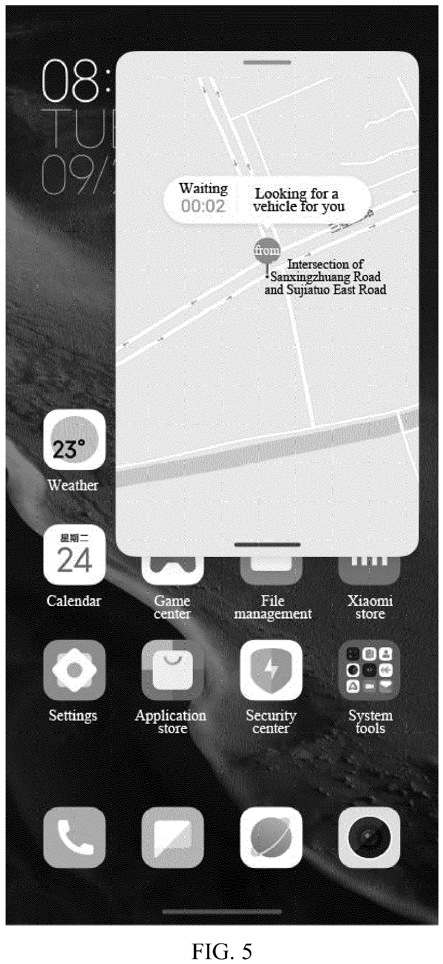

FIG. 5 is a schematic diagram illustrating a display interface of a mobile terminal in the process of implementing a method for preventing false touch of screen according to some embodiments. As shown in FIG. 3 and FIG. 5, the user can perform touch operation on the floating window in the default area located in the upper right corner shown in FIG. 3, such that the mobile terminal displays the interactive interface of the network car-hailing application through the enlarged first window as shown in FIG. 5.

When it is needed to operate the first application, the user can touch a function button on the interaction interface of the first application in the first window, and view the response result of the corresponding operation through the first window, such that the user can control different applications at the same time, thereby saving the user's operation time and improving user processing efficiency.

There is further provided a method for displaying an application interface in some embodiments of the present disclosure, the method includes the method shown in FIG. 1, and further includes: receiving a second instruction for instructing to end displaying the interactive interface of the first application in a floating window manner; and displaying the interactive interface of the first application on the display interface of the mobile terminal in a full-screen manner.

The second instruction is a touch instruction for a touch screen, a setting trigger instruction of setting buttons, a voice instruction, and the like.

When the second instruction is a touch instruction for a touch screen, for example, the second instruction includes: an instruction of pulling down a notification bar and clicking an end hanging button. Alternatively, the second instruction is an instruction of long pressing the touch screen. Alternatively, the second instruction is a sliding touch control instruction of a predetermined direction (for example, slide up) or a predetermined shape.

When the second instruction is a setting trigger instruction of setting buttons, for example, the second instruction is an instruction to simultaneously press a volume down key and the switch key.

When the second instruction is a voice instruction, for example, the corresponding voice content is "end floating display," "end hanging," "exit floating window," and the like.

There is further provided a method for displaying an application interface in some embodiments of the present disclosure, the method includes the method shown in FIG. 1, and further includes: receiving a third instruction for instructing to close a floating window, and closing the floating window.

The third instruction is a touch instruction for a touch screen, a setting trigger instruction of setting buttons, a voice instruction, and the like.

When the third instruction is a touch instruction for a touch screen, for example, the third instruction includes: an instruction of pulling down a notification bar and clicking an end hanging button. Alternatively, the third instruction is an instruction of long pressing the touch screen. Alternatively, the third instruction is a sliding touch instruction of a predetermined direction or a predetermined shape.

When the third instruction is a setting trigger instruction of setting buttons, for example, the third instruction is an instruction to simultaneously press the middle of the volume key and the switch key.

When the third instruction is a voice instruction, for example, the corresponding voice content is "close floating application" and the like.

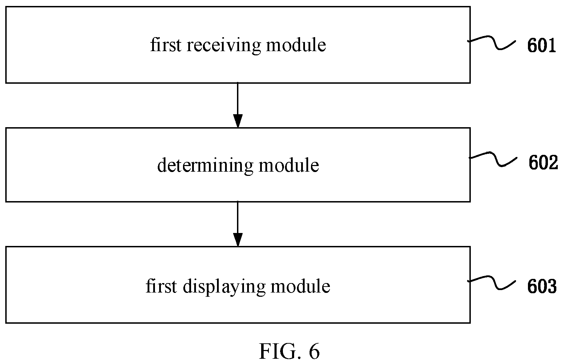

There is provided an apparatus for displaying an application interface in some embodiments of the present disclosure. FIG. 6 is a structural diagram illustrating an apparatus for displaying an application interface according to some embodiments. As shown in FIG. 6, the apparatus includes:
a first receiving component 601 configured to receive a first instruction for instructing to display an interactive interface of a current application in a floating window manner;
a determining component 602 configured to determine a first application to which an interactive interface currently displayed on a display interface of the mobile terminal belongs; and
a first displaying component 603 configured to display a floating window on the display interface of the mobile terminal, and display the interactive interface of the first application in the floating window.

There is provided an apparatus for displaying an application interface in some embodiments of the present disclosure. The apparatus includes an apparatus shown in FIG. 6, and the first displaying component 603 therein is further configured to display a floating window on the display interface of the mobile terminal by using the following method: displaying a floating window on the display interface of the mobile terminal in a set-to-top display manner. The apparatus further includes: a second displaying component configured to display an interactive interface of a second application or display a home screen desktop on the display interface of the mobile terminal in a full-screen manner when displaying a floating window on the display interface of the mobile terminal.

There is provided an apparatus for displaying an application interface in the embodiment of the present disclosure. The apparatus includes the apparatus shown in FIG. 6, and the first displaying component 603 therein is further configured to display the interactive interface of the first application in the floating window by using the following method: displaying, in a floating window manner, the interactive interface of the first application in a designated area on the display interface of the mobile terminal.

There is provided an apparatus for displaying an application interface in some embodiments of the present disclosure. The apparatus includes the apparatus shown in FIG. 6, and further includes:
a second receiving component configured to receive a drag touch signal for the floating window; and
the first displaying component 603 is further configured to change a display area of the floating window on the display interface according to a moving track of the drag touch signal.

There is provided an apparatus for displaying an application interface in some embodiments of the present disclosure. The apparatus includes the apparatus shown in FIG. 6, and further includes:
a first detecting component configured to detect distances between designated borders of the floating window and same-directional borders of the display interface when changing a display area of the floating window on the display interface according to a moving track of the drag touch signal; and
a first updating component configured to determine that a side of the display interface corresponding to the minimum distance is a target border, and update a display area of the floating window to a display area that fits the target border when the minimum distance in at least one of the detected distances is less than a first set distance.

There is provided an apparatus for displaying an application interface in some embodiments of the present disclosure. The apparatus includes the apparatus shown in FIG. 6, and further includes:
a second detecting component configured to detect distances between each vertex of the floating window and same-directional vertexes of the display interface when changing a display area of the floating window on the display interface according to a moving track of the drag touch signal; and
a second updating component configured to determine that a vertex of the display interface corresponding to the minimum distance is a target vertex, and update a display area of the floating window to a display area that fits the target vertex when the minimum distance in at least one of the detected distances is less than a second set distance.

There is provided an apparatus for displaying an application interface in some embodiments of the present disclosure. The apparatus includes the apparatus shown in FIG. 6, and further includes:
a third detecting component configured to detect a moving direction of the drag touch signal when changing a display area of the floating window on the display interface according to a moving track of the drag touch signal; and
a third updating component configured to calculate angles between the moving direction and normal directions of two borders of the display interface respectively, determine two opposite borders corresponding to the minimum angle, determine a border that the moving direction faces among the two opposite borders as a target border, and update a display area of the floating window to a display area that fits the target border; or, calculate angles between the moving direction and two diagonal lines of a touch screen respectively, determine a diagonal line corresponding to the minimum angle, use a vertex that the moving direction faces in the diagonal lines as a target vertex, and update a display area of the floating window to a display area that fits the target border.

There is provided an apparatus for displaying an application interface in some embodiments of the present disclosure. The apparatus includes the apparatus shown in FIG. 6, and further includes:
a third receiving component configured to receive a first set touch signal for the floating window;
a third displaying component configured to display the interactive interface of the first application in a first window, a size of the first window is smaller than that of the display interface of the mobile terminal;
a fourth receiving component configured to receive a click touch signal for a control of the interactive interface of the first application in the first window; and
a fourth displaying component configured to determine a response interface of the first application for the click touch signal, and display the response interface in the first window.

There is provided an apparatus for displaying an application interface in some embodiments of the present disclosure. The apparatus includes the apparatus shown in FIG. 6, and further includes:
a fifth receiving component configured to receive a second instruction for instructing to end displaying the interactive interface of the first application in a floating window manner; and
a fifth displaying component configured to display the interactive interface of the first application on the display interface of the mobile terminal in a full-screen manner.

There is provided an apparatus for displaying an application interface in some embodiments of the present disclosure. The apparatus includes the apparatus shown in FIG. 6, and further includes:
a sixth receiving component configured to receive a third instruction for instructing to close a floating window; and
a closing component configured to close the floating window.

There is provided an apparatus for displaying an application interface in some embodiments of the present disclosure, and the apparatus includes:
a processor; and
memory storing instructions executable by the processor;
wherein the processor is configured to execute the executable instructions in the memory to implement steps of the above-described methods.

There is provided a non-transitory computer-readable storage medium having executable instructions stored thereon, wherein when the executable instructions are executed by a processor, steps of the above-described methods are implemented

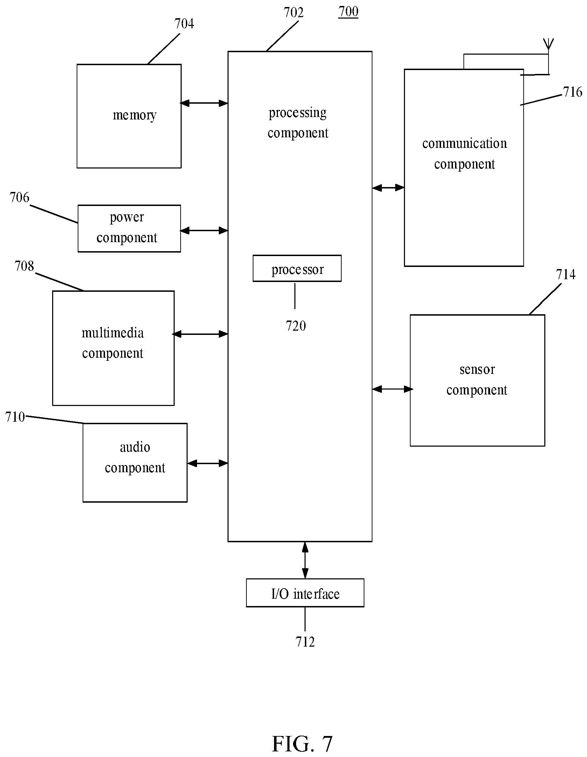

FIG. 7 is a block diagram illustrating a device 700 for displaying an application interface according to some embodiments. For example, the device 700 can be a mobile phone, a computer, a digital broadcast terminal, a messaging device, a gaming console, a tablet, a medical device, exercise equipment, a personal digital assistant, and the like.

Referring to FIG. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to implement all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, videos, etc. The memory 704 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 supplies power to various components of the device 700. The power component 706 may include a power management system, one or more power sources, and any other components associated with the generation, management, and distribution of power in the device 700.

The multimedia component 708 includes a screen providing an output interface between the device 700 and a user. In some embodiments, the screen may include a liquid crystal display (LCD) and a touch panel (TP). In some embodiments, an organic light-emitting diode (OLED) display can be adopted.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 708 includes a front camera and/or a rear camera. The front camera and/or the rear camera can receive external multimedia data while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the device 700 is in an operation mode, such as a call mode, a recording mode, and a voice recognition mode. The received audio signal can be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 can detect an on/off status of the device 700, relative positioning of components, e.g., the display and a keypad, of the device 700, the sensor component 714 can also detect a change in position of the device 700 or one component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 can also include an accelerometer sensor, a gyroscope sensor, a magnetic sensor, a pressure sensor, or a temperature sensor.

The communication component 716 is configured to facilitate wired or wireless communication between the device 700 and other devices. The device 700 can access a wireless network based on a communication standard, such as Wi-Fi, 2G, 3G, 4G, or 5G, or a combination thereof. In some embodiments, the communication component 716 receives a broadcast signal or broadcast associated information from an external broadcast management system via a broadcast channel. In some embodiments, the communication component 716 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In some embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as the memory 704 including the instructions executable by the processor 720 in the device 700, for performing the above-described methods. For example, the non-transitory computer-readable storage medium can be a ROM, a random access memory (RAM), a CD-ROM, a magnetic tape, a floppy disc, an optical data storage device, and the like.

Various embodiments of the present disclosure can have one or more the following advantages.

When a response time of the first application to certain requests is longer, for example than a predetermined threshold, in the process that users use the first application, the interactive interface of the first application is displayed in a floating window manner, such that the users can view the response of the first application at any time, and can view information other than the first application, and the users can freely control the waiting time without losing the progress of the first application, which improves the efficiency of using the mobile terminal by the users, and improves the user experience.

The various circuits, device components, units, blocks, or portions may have modular configurations, or are composed of discrete components, but nonetheless can be referred to as "units," "modules," or "portions" in general. In other words, the "circuits," "components," "modules," "blocks," "portions," or "units" referred to herein may or may not be in modular forms, and these phrases may be interchangeably used.

In some embodiments, the control and/or interface software or app can be provided in a form of a non-transitory computer-readable storage medium having instructions stored thereon is further provided. For example, the non-transitory computer-readable storage medium may be a Read-Only Memory (ROM), a Random-Access Memory (RAM), a Compact Disc Read-Only Memory (CD-ROM), a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more modules of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium may be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures. For example, the devices can be controlled remotely through the Internet, on a smart phone, a tablet computer or other types of computers, with a web-based graphic user interface (GUI).

A computer program (also known as a program, software, software application, app, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a mark-up language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode) display, other flexible configuration, or any other monitor for displaying information to the user and a keyboard, a pointing device, e.g., a mouse, trackball, etc., or a touch screen, touch pad, etc., by which the user can provide input to the computer.

Other types of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In an example, a user can speak commands to the audio processing device, to perform various operations.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope of the disclosure is indicated by the following claims.

## Claims

1. A method for displaying an application interface, applied to a mobile terminal, comprising:
receiving (S11) a first instruction for instructing to display an interactive interface of a current application in a floating window manner;
determining (S12) a first application to which the interactive interface currently displayed on a display interface of the mobile terminal belongs; and
displaying (S13) a floating window on the display interface of the mobile terminal, and displaying the interactive interface of the first application in the floating window.

2. The method according to claim 1, wherein the displaying (S13) a floating window on the display interface of the mobile terminal comprises:
displaying the floating window on the display interface of the mobile terminal in a set-to-top display manner; and
the method further comprises:
displaying an interactive interface of a second application or displaying a home screen desktop on the display interface of the mobile terminal in a full-screen manner when displaying the floating window on the display interface of the mobile terminal.

3. The method according to claim 1 or 2, wherein the displaying the interactive interface of the first application in the floating window comprises:
displaying, in the floating window manner, the interactive interface of the first application in a designated area on the display interface of the mobile terminal.

4. The method according to any of claims 1-3, further comprising:
receiving a drag touch signal for the floating window, and changing a display area of the floating window on the display interface according to a moving track of the drag touch signal.

5. The method according to any of claims 1-4, further comprising at least one of:
detecting distances between designated borders of the floating window and same-directional borders of the display interface, when changing a display area of the floating window on the display interface according to a moving track of the drag touch signal, and determining that a side of the display interface corresponding to a minimum distance of at least one of the detected distances is a target border, and updating the display area of the floating window to a display area that fits the target border, when the minimum distance is less than a first set distance; and
detecting distances between each vertex of the floating window and same-directional vertexes of the display interface, when changing the display area of the floating window on the display interface according to a moving track of the drag touch signal, and determining that a vertex of the display interface corresponding to a minimum distance of the at least one of the detected distances is a target vertex, and updating the display area of the floating window to a display area that fits the target vertex, when the minimum distance is less than a second set distance.

6. The method according to any of claims 1-5, further comprising:
detecting a moving direction of the drag touch signal when changing the display area of the floating window on the display interface according to the moving track of the drag touch signal; and
implementing at least one of the following calculations and their related operations:
calculating angles between the moving direction and normal directions of two borders of the display interface respectively, determining two opposite borders corresponding to a minimum angle, using a border that the moving direction faces among the two opposite borders as a target border, and updating the display area of the floating window to the display area that fits the target border; and
calculating angles between the moving direction and two diagonal lines of a touch screen respectively, determining a diagonal line corresponding to the minimum angle, using a vertex that the moving direction faces in the diagonal lines as a target vertex, and updating the display area of the floating window to the display area that fits the target border.

7. The method according to any of claims 1-6, further comprising:
receiving a first set touch signal for the floating window, displaying the interactive interface of the first application in a first window, a size of the first window is smaller than that of the display interface of the mobile terminal, receiving a click touch signal for a control of the interactive interface of the first application in the first window, determining a response interface of the first application for the click touch signal, and displaying the response interface in the first window.

8. The method according to any of claims 1-7, further comprising:
receiving a second instruction for instructing to end displaying the interactive interface of the first application in the floating window manner; and
displaying the interactive interface of the first application on the display interface of the mobile terminal in a full-screen manner.

9. The method according to any of claims 1-8, further comprising:
receiving a third instruction for instructing to close the floating window, and closing the floating window.

10. An apparatus for displaying an application interface, applied to a mobile terminal, comprising:
a first receiving module (601) configured to receive a first instruction for instructing to display an interactive interface of a current application in a floating window manner;
a determining module (602) configured to determine a first application to which the interactive interface currently displayed on a display interface of the mobile terminal belongs; and
a first displaying module (603) configured to display a floating window on the display interface of the mobile terminal, and display the interactive interface of the first application in the floating window.

11. The apparatus according to claim 10, wherein the first displaying module (601) is further configured to display a floating window on the display interface of the mobile terminal by:
displaying the floating window on the display interface of the mobile terminal in a set-to-top display manner; and
the apparatus further comprises:
a second displaying module configured to display an interactive interface of a second application or display a home screen desktop on the display interface of the mobile terminal in a full-screen manner when displaying the floating window on the display interface of the mobile terminal.

12. The apparatus according to claim 10 or 11, wherein the first displaying module (601) is further configured to display the interactive interface of the first application in the floating window by:
displaying, in the floating window manner, the interactive interface of the first application in a designated area on the display interface of the mobile terminal.

13. The apparatus according to any of claims 10-12, wherein the apparatus further comprises:
a second receiving module configured to receive a drag touch signal for the floating window; and
the first displaying module (603) is further configured to change a display area of the floating window on the display interface according to a moving track of the drag touch signal.

14. A non-transitory computer-readable storage medium having instructions stored thereon for execution by a processor to implement operations of the method according to any of claims 1-9.

15. A mobile terminal implementing the method for displaying an application interface of any of claims 1-9, wherein the mobile terminal is configured to display an interactive interface of an application in a floating window manner when a response time of the application to certain requests is longer than a predetermined threshold in a process for a user to use the application, to thereby facilitate the user viewing a response of the first application at any time, while viewing information other than the first application, and enable the user to freely control a waiting time without losing progress of the first application.
